# EUROPÄISCHE PATENTANMELDUNG

(11) **EP 1 676 660 A1**
(43) Veröffentlichungstag der Anmeldung: **05.07.2006**
(21) Anmeldenummer: 05111057.5
(22) Anmeldetag: 22.11.2005
(51) Int. Cl.: B23H 7/10

(54) **Vorrichtung zum Elektroerodieren von Werkstücken**

(30) Priorität: 29.12.2004 DE 102004063164
(71) Anmelder: ROBERT BOSCH GMBH, 70442 Stuttgart (DE)
(72) Erfinder: Hohmann, Eugen, 96191 Viereth-Trunstadt (DE)

(57) **Zusammenfassung**

Vorrichtung zum Elektroerodieren von Werkstücken (10) mit einem Erodierdraht (1), an den eine zum Elektroerodieren geeignete Spannung anlegbar ist. Ein Spülmedium tritt so durch wenigstens einer Spüldüsenöffnung (20) aus, dass das Spülmedium in die durch das Elektroerodieren geschaffene Ausnehmung (30) einfließt, wobei die wenigstens eine Spüldüsenöffnung (20) so ausgerichtet ist, dass das Spülmedium in der Ausnehmung (30) eine drallförmige Strömung aufweist (Fig. 1).

## Beschreibung

### Stand der Technik

Es ist seit langem aus dem Stand der Technik bekannt, Ausnehmungen in metallische Werkstücke durch so genanntes Elektroerodieren einzubringen. Hierbei wird zwischen dem Werkstück und einem Erodierdraht eine geeignete, hohe Spannung angelegt und die Spitze des Erodierdrahts anschließend so nahe an das Werkstück herangeführt, dass eine Funkenentladung zwischen der Spitze des Erodierdrahts und dem Werkstück stattfindet. Durch den Erodierstrom wird Material aus dem Werkstück abgetragen, sodass sich Ausnehmungen verschiedener Gestalt und Form in metallische Werkstücke einbringen lassen, auch in gehärtete Stähle.

Damit die Qualität des Erodierprozesses im Laufe der Fertigung nicht abnimmt, ist es wichtig, dass das abgetragene Material rasch aus der Ausnehmung herausgebracht wird. Dies wird üblicherweise dadurch erreicht, dass mit einem Fluid, insbesondere mit Gasen oder mit Flüssigkeiten, das abgetragene Material aus der entstehenden Ausnehmung herausgespült wird, um so an der Erodierdrahtspitze stets die gleichen Bedingungen herzustellen, die für einen effektiven Erodierprozess notwendig sind. Hierbei kann es jedoch vorkommen, dass nicht sämtliches abgetragenes Material aus der Ausnehmung herausgespült wird und sich so die Bedingungen für das Elektroerodieren mit der Zeit ändern. Dies führt zu ungleichmäßigen Ausnehmungen und zu einer verschlechterten Oberflächenqualität der Ausnehmungen.

### Vorteile der Erfindung

Die erfindungsgemäße Vorrichtung zum Elektroerodieren von Werkstücken weist demgegenüber den Vorteil auf, dass das abgetragene Material aus den Ausnehmungen schnell und vollständig entfernt wird. Dies ermöglicht einen stets gleich bleibenden, konstanten Erodierprozess, was eine hohe Qualität der erzeugten Ausnehmungen ermöglicht. Dies ist insbesondere bei sehr kleinen Öffnungen notwendig, da hier bereits kleine Abweichungen von der gewünschten Form zu Funktionsbeeinträchtigungen führen, wenn diese als Öffnung bzw. als Drossel für den Durchgang einer Flüssigkeit verwendet wird. Um dies zu erreichen weist die Erodiervorrichtung wenigstens eine Spüldüsenöffnung auf, aus der ein Spülmedium so austritt, dass in der Ausnehmung des Werkstücks ein Drall entsteht. Durch die rotierende Spülflüssigkeit in der Ausnehmung werden die Partikel schnell und vollständig entfernt, insbesondere solche, die sich am Rand der Ausnehmung anlagern.

Durch die abhängigen Ansprüche sind vorteilhafte Weiterbildungen des Gegenstandes der Erfmdung möglich. In einer ersten vorteilhaften Ausgestaltung sind mehrere Spüldüsenöffnungen vorgesehen, die vorzugsweise gleichmäßig um den Erodierdraht herum angeordnet sind. Durch eine entsprechende Ausrichtung der einzelnen Spüldüsenöffnungen lässt sich ein effektiver Drall in der Ausnehmung des Werkstücks erzeugen und gleichzeitig relativ viel Spülmedium in die Ausnehmung einbringen. Dies optimiert die Materialabtragung und damit den Erodierprozess.

In einer weiteren vorteilhaften Ausgestaltung ist der Erodierdraht in einer Führung geführt, die im wesentlichen aus einer Führungsplatte mit einer darin ausgebildeten Führungsöffnung besteht, durch die der Erodierdraht hindurchtritt. In vorteilhafter Weise lassen sich die Spüldüsenöffnungen in dieser Führungsplatte ausbilden und so anordnen, dass um die Führungsöffnung herum und damit auch in der Ausnehmung des Werkstücks ein Drall des Spülmediums entsteht, der das Material herausspült.

Um das Spülmedium effektiv zu den Spüldüsenöffnungen zu bekommen und gleichzeitig den Erodierdraht in der gewünschten Art und Weise zu bewegen kann es vorteilhafterweise vorgesehen sein, den Erodierdraht in einer inneren Führung zusätzlich zu fähren, die am Ende eines Zulaufrohrs angebracht ist. Durch das Zulaufrohr wird das Spülmedium eingebracht, das dann in den Zwischenraum zwischen dem Zulaufrohr und einem Außenrohr eintritt, wobei das Außenrohr die Führungsplatte hält. Damit lässt sich der Erodierdraht effektiv bewegen, insbesondere in eine taumelnde Bewegung versetzen, und gleichzeitig eine große Menge Spülmedium zu den Düsenöffnungen bringen.

Weitere vorteilhafte Ausgestaltungen der Erfindung sind der Beschreibung und der Zeichnung entnehmbar.

### Zeichnung

In der Zeichnung ist ein Ausführungsbeispiel der erfindungsgemäßen Erodiervorrichtung dargestellt. Es zeigt
- Figur 1: einen Längsschnitt durch eine erfindungsgemäße Erodiervorrichtung in schematischer Darstellung,
- Figur 2: einen weiteren Betriebszustand der gleichen Erodiervorrichtung und
- Figur 3: eine Draufsicht auf die Führungsplatte der Erodiervorrichtung.

### Beschreibung des Ausführungsbeispiels

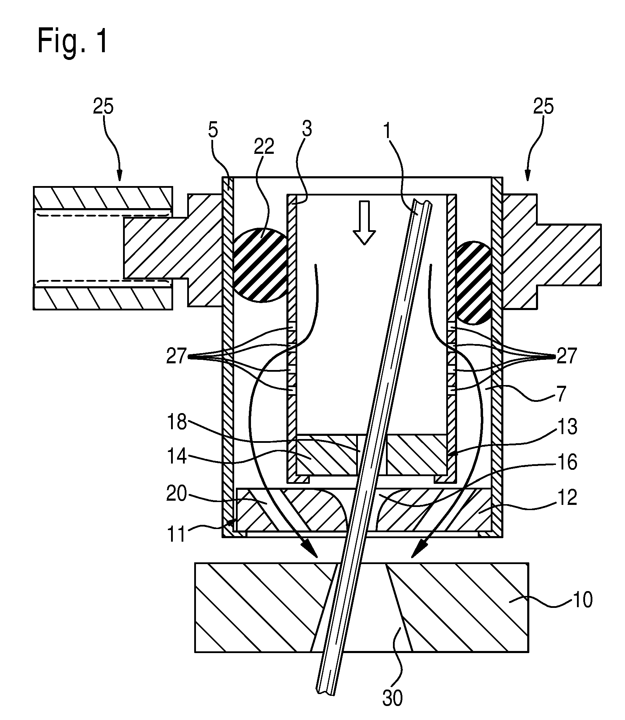

In Figur 1 ist eine erfindungsgemäße Vorrichtung zum Elektroerodieren von Werkstücken schematisch im Längsschnitt dargestellt. Die Erodiervorrichtung umfasst einen Erodierdraht 1, der mit einer in der Zeichnung nicht dargestellten Spannungsquelle verbunden ist, durch die eine Spannung zwischen dem Erodierdraht 1 und einem metallischen Werkstück 10 angelegt werden kann. Der Erodierdraht 1 ist in einem Außenrohr 5 angeordnet, das im wesentlichen eine zylindrische Form aufweist und das an seinem dem Werkstück zugewandten Ende durch eine Führung 11 in Form einer Führungsplatte 12 begrenzt wird. Das Außenrohr ist an Aktoren 25 aufgehängt, durch die das Außenrohr 5 in x- und y-Richtung bezüglich des Werkstücks 10 bewegbar ist, sodass die Führungsplatte 12 stets parallel zum Werkstück 10 ist. Hierzu können zwei Aktoren 25 oder auch mehr als zwei Aktoren vorgesehen sein, die für eine Bewegung in x-y-Richtung notwendig sind. Welche Art von Aktoren 25 verwendet wird, hängt unter anderem von der Prozessgeschwindigkeit und dem zu verfahrenden Weg ab. Beispielsweise können Piezo-Aktoren verwendet werden, die das Außenrohr 5 sehr schnell in die gewünschte Position verfahren können.

Die Führungsplatte 12 weist eine Führungsöffnung 16 auf, die sich ausgehend vom Inneren des Außenrohrs 5 verjüngt und dadurch eine trichterförmige Gestalt aufweist. Der Erodierdraht 1 tritt durch die Führungsöffnung 16 hindurch und kann soweit vorgeschoben werden, dass die Spitze des Erodierdrahts 1 ausreichend weit an das Werkstück 10 angenähert werden kann. In der Führungsplatte 12 sind darüber hinaus mehrere Spüldüsenöffnungen 20 ausgebildet, die hier als Schrägbohrungen ausgebildet sind. Die Spüldüsenöffnungen 20 verbinden das Innere des Außenrohrs 5 mit dem Zwischenraum zwischen der Führungsplatte 12 und dem Werkstück 10.

Im Außenrohr 5 ist ein Zulaufrohr 3 angeordnet, das ebenfalls im wesentlichen eine kreiszylindrische Form aufweist und dessen der Führungsplatte 12 zugewandtes Ende durch eine innere Führung 13 in Form einer inneren Führungsplatte 14 begrenzt wird. Die innere Führungsplatte 14 weist eine innere Führungsöffnung 18 auf, durch der Erodierdraht 1 ebenfalls hindurchtritt. Das Zulaufrohr 3 ist hierbei raumfest gegenüber dem Werkstück 10 angeordnet, sodass die innere Führungsöffnung 18 ihre Position während des Erodiervorgangs bzgl. des Werkstücks 10 nicht ändert. Im Zulaufrohr 3 sind mehrere Öffnungen 27 ausgebildet, die das Innere des Zulaufrohrs 3 mit einem Zwischenraum 7 verbinden, der zwischen dem Zulaufrohr 3 und dem Außenrohr 5 ausgebildet ist. Der Zwischenraum 7 ist hierbei dem Werkstück 10 abgewandt durch einen elastischen Dichtungsring 22 abgedichtet, der beispielsweise aus Silikon gefertigt ist.

Das Innere des Zulaufrohrs 3 ist mit einer Pumpe verbunden, die in der Zeichnung nicht dargestellt ist und die ein Spülmedium, beispielsweise entionisiertes Wasser oder ein chemisch inertes Gas, unter einem gewissen Druck in das Zulaufrohr 3 pumpt. Das Spülmedium tritt dann durch die Öffnungen 27 in den Zwischenraum 7 ein und fließt von dort durch die Spüldüsenöffnungen 20 in den Zwischenraum zwischen der Führungsplatte 12 und dem Werkstück 10. Die Spüldüsenöffnungen 20 sind hierbei so angeordnet, dass in dem Bereich, in dem die Spitze des Erodierdrahts 1 auf das Werkstück 10 trifft, eine kreisende Strömung des Spülmediums entsteht. Dieses kreisende Spülmedium tritt in die Ausnehmung 30 ein nachdem der Erodiervorgang fortgeschritten ist und führt dort dazu, dass abgetragenes Material aus der Ausnehmung 30 in den Spalt zwischen der Führungsplatte 12 und dem Werkstück 10 herausgespült und von dort radial nach außen abgeführt wird.

Der Erodiervorgang funktioniert wie folgt: Zu Beginn des Erodiervorgangs wird der Erodierdraht 1 durch eine Vorschubvorrichtung soweit vorgeschoben, dass die Spitze des Erodierdrahts 1 vom Werkstück 10 den gewünschten Abstand hat, sodass nach dem Anlegen einer Spannung zwischen dem Erodierdraht 1 und dem Werkstück 10 ein Erodierstrom fließt, der zu einem Materialabtrag im Werkstück 10 führt. Um das Material effektiv abzutragen, wird das Spülmedium in das Zulaufrohr 3 eingeführt, tritt durch die Öffnungen 27 in den Zwischenraum 7 ein und fließt von dort durch die Spüldüsenöffnungen 20 in den Zwischenraum zwischen der Führungsplatte 12 und dem Werkstück 10. Durch die Anordnung der Spüldüsenöffnungen 20 ergibt sich eine rotierende Strömung des Spülmediums, das in die Ausnehmungen 30 eintritt und das abgetragene Material ausspült.

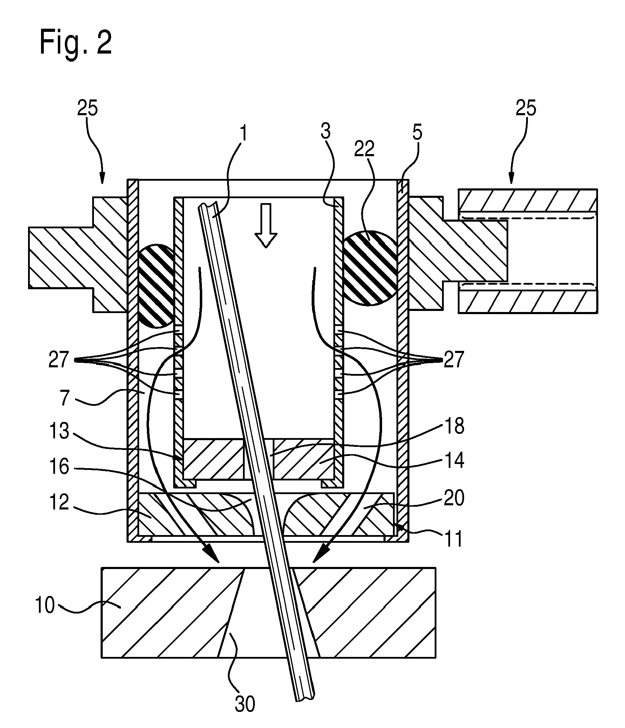

Um den Erodierdraht 1 zu bewegen und kompliziertere Ausnehmungen wie bspw. eine konische Ausnehmung 30 auszubilden, wie sie in Figur 1 dargestellt ist, kann das Außenrohr 5 durch die Aktoren 25 bewegt werden. Da das Innenrohr 3 ortsfest bleibt, wird der Erodierdraht 1 in eine entsprechende Taumelbewegung versetzt, sodass bei weiterem Vorschub des Erodierdrahts 1 eine konische Ausnehmung 30 entsteht. Figur 2 zeigt hierzu einen zweiten Zustand der Erodiervorrichtung, in dem die Aktoren 25 das Außenrohr 5 nach rechts versetzt haben, sodass der Erodierdraht 1 nunmehr durch die Führungsöffnung 16 und die innere Führungsöffnung 18 in eine im Vergleich zu Figur 1 entgegengesetzte Schräglage gebracht ist. Das Spülmedium, dessen Weg sowohl in Figur 1 als auch in Figur 2 durch Pfeile angedeutet ist, wird hierbei stetig nachgeführt, um stets die optimalen Bedingungen an der Spitze des Erodierdrahts 1 zu erhalten.

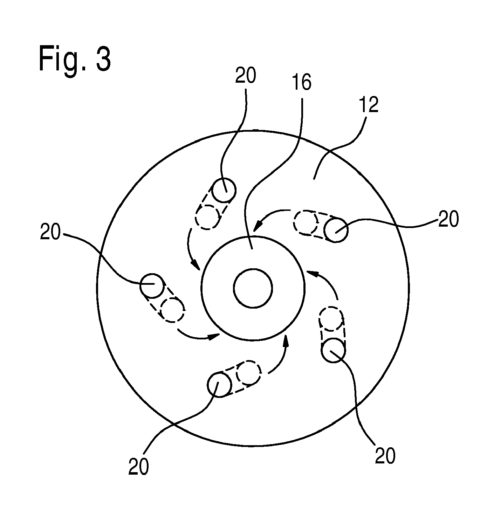

In Figur 3 ist eine Draufsicht auf die Führungsplatte 2 dargestellt mit in diesem Ausführungsbeispiel fünf Spüldüsenöffnungen 20. Die Spüldüsenöffnungen 20 sind hier als Schrägbohrungen ausgeführt, sodass beim Durchtritt des Spülmediums, vorzugsweise einer Flüssigkeit, eine Drallströmung um die Führungsöffnung 16 entsteht, was in Figur 3 durch Pfeile angedeutet ist.

Als Spülmedium kann bspw. entionisiertes Wasser verwendet werden. Auch ein gasförmiges Spülmedium, bspw. Stickstoff, kommt hierbei in Frage. Auch andere Spülflüssigkeiten oder Gase können je nach Anwendung in Frage kommen.

## Patentansprüche

1. Vorrichtung zum Elektroerodieren von Werkstücken (10) mit einem Erodierdraht (1), an den eine zum Elektroerodieren geeignete Spannung anlegbar ist, und mit wenigstens einer Spüldüsenöffnung (20), durch die ein Spülmedium so austritt, dass das Spülmedium in eine durch das Elektroerodieren geschaffene Ausnehmung (30) einfließt, **dadurch gekennzeichnet, dass** die wenigstens eine Spüldüsenöffnung (20) so ausgerichtet ist, dass das in die Ausnehmung einfließende Spülmedium in der Ausnehmung (30) eine drallförmige Strömung aufweist.

2. Vorrichtung nach Anspruch 1, **dadurch gekennzeichnet, dass** mehrere Spüldüsenöffnungen (20) vorgesehen sind, die vorzugsweise gleichmäßig um den Erodierdraht (1) herum angeordnet sind.

3. Vorrichtung nach Anspruch 1, **dadurch gekennzeichnet, dass** eine Führungsplatte (12) mit einer darin ausgebildeten Führungsöffnung (16) vorgesehen ist, durch die der Erodierdraht (1) hindurchtritt.

4. Vorrichtung nach Anspruch 3, **dadurch gekennzeichnet, dass** die wenigstens eine Spüldüsenöffnung (20) in der Führungsplatte (12) ausgebildet ist.

5. Vorrichtung nach Anspruch 4, **dadurch gekennzeichnet, dass** mehrere Spüldüsenöffnungen (20) vorgesehen sind, die vorzugsweise gleichmäßig um die Führungsöffnung (16) herum angeordnet sind.

6. Vorrichtung nach Anspruch 3, **dadurch gekennzeichnet, dass** der Erodierdraht (1) in einer zweiten Führung (13) geführt ist, wobei die Führungsplatte (12) bezüglich der zweiten Führung (13) beweglich ist.

7. Vorrichtung nach Anspruch 3 oder 6, **dadurch gekennzeichnet, dass** die Führungsplatte (18) in einem Außenrohr (5) angeordnet ist, wobei die Führungsplatte (12) das Außenrohr (5) an einem Ende begrenzt.

8. Vorrichtung nach Anspruch 7, **dadurch gekennzeichnet, dass** die innere Führung (13) in einem Zulaufrohr (3) angeordnet ist, das im Außenrohr (5) angeordnet ist und wobei das Spülmedium durch das Zulaufrohr (3) den Spüldüsenöffnungen (20) zugeführt wird.

9. Vorrichtung nach Anspruch 8, **dadurch gekennzeichnet, dass** im Zulaufrohr (3) Verbindungen (27) ausgebildet sind, durch die das Innere des Zulaufrohrs (3) mit einem zwischen Zulaufrohr (3) und Außenrohr (5) gebildeten Zwischenraum (7) verbunden wird.

10. Vorrichtung nach Anspruch 9, **dadurch gekennzeichnet, dass** die Spüldüsenöffnungen (20) die dem Werkstück (10) zugewandte Außenseite der Führungsplatte (12) mit dem Zwischenraum (7) verbinden.

11. Vorrichtung nach einem der Ansprüche 1 bis 10, **dadurch gekennzeichnet, dass** das Spülmedium eine Flüssigkeit ist, vorzugsweise Wasser.
